Europäisches Patentamt

European Patent Office

Office européen des brevets

(11) Veröffentlichungsnummer: **0 667 097 A1**

(12) **EUROPÄISCHE PATENTANMELDUNG**

(21) Anmeldenummer: **95100956.2**

(22) Anmeldetag: **25.01.95**

(51) Int. Cl.6: **A01N 55/00**

(30) Priorität: **02.02.94 DE 4403062**

(43) Veröffentlichungstag der Anmeldung:
**16.08.95 Patentblatt 95/33**

(84) Benannte Vertragsstaaten:
**DE ES FR GB GR IT NL**

(71) Anmelder: **Hoechst Schering AgrEvo GmbH**
**Miraustrasse 54**
**D-13509 Berlin (DE)**

(72) Erfinder: **Kern, Manfred, Dr.**
**Traminerweg 8**
**D-55296 Lörzweiler (DE)**

(54) **Formulierung und Verfahren zur Bekämpfung von sozialen Insekten.**

(57) Die Erfindung betrifft Silafluofen enthaltende Formulierungen zur Bekämpfung von sozialen Insekten sowie ein Verfahren zur Bekämpfung derselben, bei welchem die Insektenpopulationen mit akut subletalen Dosen an Silafluofen abgetötet werden.

EP 0 667 097 A1

Die Erfindung betrifft Silafluofen enthaltende Formulierungen zur Bekämpfung von sozialen Insekten sowie ein Verfahren zur Bekämpfung derselben, bei welchem die Insektenpopulationen mit akut subletalen Dosen an Silafluofen abgetötet werden.

Die beiden wichtigsten passiven Verfahren zur Insektenbekämpfung sind Fallen und toxische Köder. Um ihre Wirkung zu entfalten, müssen beide Typen einen die Insekten anlockenden Bestandteil enthalten. Ein Lockstoff für Wespen wird beispielsweise im US-Patent 4 851 218 beschrieben. Klassische Insektenfallen, sei es Zuckerwasser in einem Behälter oder ein mit Klebstoff beschichteter Fliegenfänger, wirken nur auf die angelockten Individuen.

Toxische Zubereitungen können mit unterschiedlich wirkenden Insektenbekämpfungsmitteln formuliert werden, wobei zwei hauptsächliche Wirkprinzipien zu unterscheiden sind: die schnelle Wirkung und die verzögerte Wirkung.

Schnell wirkende Insektenbekämpfungsmittel, welche die Insekten unmittelbar nach Kontakt oder Nahrungsaufnahme abtöten, sind geeignet zur Bekämpfung von nicht staatenbildenden Insekten. Diese Insektenbekämpfungsmittel werden in der Regel als Aerosole oder in Sprayform eingesetzt. Sie werden am einfachsten in Form von wäßrigen, partiell wäßrigen oder nichtwäßrigen Formulierungen angewandt.

Insektenbekämpfungsmittel mit verzögerter Wirkung sind für einen anderen Insektentyp, nämlich für die sogenannten sozialen oder staatenbildenden Insekten geeignet. Eine langsame Freisetzung des toxischen Teils eines Moleküls kann beispielsweise für Wirkung verzögernd wirkender Pestizide verantwortlich sein. Weitere Methoden zur verzögerten Freisetzung von Wirkstoffen sind der Einsatz von semipermeablen Membranen, die Mikroverkapselung oder die Bindung der Wirkstoffe an Polymere. Insektenbekämpfungsmittel, die in dem Stoffwechsel der Insekten eingreifen und lebenswichtige Vorgänge unterbrechen, können auch mit zeitlicher Verzögerung die Abtötung der Insekten zur Folge haben. Ein weiterer Typ verzögernd wirkender Insektenbekämpfungsmittel ist jener, der höher konzentriert schnell wirkt, d.h. akut letal ist, in geringer, sogenannter akut subletaler Dosis die Insekten erst nach wiederholter Aufnahme geringer Mengen des Wirkstoffs die Insekten mit zeitlicher Verzögerung tötet.

Zu den sozialen Insekten zählen die Ameisen, Termiten, Wespen und Bienen, wobei es bei den Wespen und Bienen auch nicht staatenbildende Arten gibt. Als "soziale Insekten" bezeichnet man jene Insektenarten, bei denen alle Nachkommen eines Weibchens (Königin) oder mehrerer Weibchen in Nestgemeinschaften (Insektenstaaten) mit strenger Arbeitsteilung zusammenleben. Das schnelle Abtöten einzelner Individuen hat keinen Einfluß auf die Nestgemeinschaft. Wenn jedoch ein verzögernd wirkender Stoff beispielsweise mit einem Köder gemischt wird, werden die Nahrung sammelnden Individuen diese Formulierung ins Nest transportieren, wo sie an Larven, die Arbeiter und die Königin verteilt wird. Wenn genügend Wirkstoff ins Nest zurücktransportiert worden ist, kann die gesamte Kolonie durch einen solchen Nahrungsmittelaustausch innerhalb von 1 bis 2 Wochen abgetötet werden. Um sicherzustellen, daß auch genügend Wirkstoff ins Nest zurückgetragen wird, darf die zur Anlockung der Insekten bestimmte Formulierung des Wirkstoff keine die Insekten abstoßende Wirkung haben. Ferner sollte sie vor Abbau geschützt sein.

Eine Reihe von Wirkstoff-Formulierungen mit verzögerter Wirkung und deren Verwendung bei der Bekämpfung von sozialen Insekten sind bereits bekannt. So werden in WO 92/14363 wäßrige Formulierungen von Perfluoralkansulfonsäure-Salzenzur Bekämpfung insbesondere von Wespen beschrieben. Dort werden auf den Seiten 3 bis 6 auch ausführlich die Vor- und Nachteile weiterer Formulierungen mit verzögerter Wirkung, die aus dem Stand der Technik bekannt sind, bei der Bekämpfung sozialer Insekten diskutiert.

Es wurde nun überraschenderweise gefunden, daß 4-Ethoxyphenyl-[3-(4-fluor-3-phenoxy-phenyl)-propyl]-dimethyl-silan (= Silafluofen) eine genügend geringe Kontaktwirkung aufweist, daß es in akut subletalen Dosen von Wespen und anderen sozialen Insekten in einem geeigneten Futter aufgenommen und ins Nest eingetragen wird, wo es eine "stocksystemische" Wirkung entfaltet mit der Folge, daß später die anderen Nest- bzw. Stockbewohner abgetötet werden.

Die Erfindung betrifft daher insektizide Formulierungen zur Bekämpfung von sozialen Insekten, enthaltend Silafluofen und einen geeigneten Träger, wobei der Gehalt an Silafluofen so bemessen ist, daß die Formulierung bei den Individuen, welche diese aufnehmen, nicht akut letal wirkt, sowie ein Verfahren zur Bekämpfung von sozialen Insekten, bei welchem an einem für die Insekten zugänglichen und von ihnen häufig besuchten Ort eine Silafluofen enthaltende Formulierung plaziert wird, die Insekten die Formulierung aufnehmen, in ihr Nest transportieren und dort gegebenenfalls an andere Individuen verfüttern, wobei der Gehalt an Silafluofen so bemessen ist, daß die Formulierung mit einer zeitlichen Verzögerung die Individuen, welche die Formulierung direkt und/oder durch Verfüttern aufgenommen haben, abtötet.

Silafluofen und Verfahren zu dessen Herstellung sind aus US-Patent 4 864 027 bekannt. Formulierungen, die diesen Wirkstoff enthalten, werden u.a. in EP-A-443412 beschrieben.

Unter sozialen Insekten versteht man staatenbildende Arten aus den Hymenoptera-Familien und -Überfamilien Formicidae, Apoidea und Vespoidea, sowie Arten aus der Ordnung Isoptera.

Zu den oben erwähnten Insekten gehören:

Aus der Ordnung der Isoptera die Familien Mastotermitidae, Kalotermitidae, Hodotermitidae (insbesondere Hodotermitinae, Termopsinae), Rhinotermitidae (insbesondere Coptotermitinae, Heterotermitinae, Psammotermitinae), Termitidae (insbesondere Macrotermitinae, Nasutitermitinae, Termitinae), z.B. Mastotermes sp., wie Mastrotermes darwiniensis, Cryptotermes sp., Incistitermes sp., Kalotermes sp., wie Kalotermes flavicollis, Marginitermes sp., Anaconthotermes sp., Zootermopsis sp., Coptotermes sp., wie Coptotermes formosanus, Heterotermes sp., Psammotermes sp., Prorhinotermes sp., Schedorhinotermes sp., Allodontermes sp., Nasutitermes sp., Termes sp., Amitermes sp., Globitermes sp., Microcerotermes sp., Oniscus asselus, Armadium vulgare, Porcellio scaber, Reticulitermes sp., wie Reticulitermes flavipes, Reticulitermes lucifugus.

Aus der Familie der Formicidae, z.B. Atta cephalotes, Lasius niger, Lasius brunneus, Componotus ligniperda, Monomorium pharaonis, Solenopsis geminata, Monomorium minimum, Iridomyres humilis, Dorylus sp., Exiton sp..

Aus der Überfamilie der Vespoidea, z.B. Vespa germanica, Vespa vulgaris, Vespa media, Vespa saxonica, Vespa crabro, Vespula macalata, Polistes nympha, Vespa orintalis, Vespa mandarinia, Vespa velutina.

Aus der Überfamilie der Apoidea sei die sogenannte Killerbiene erwähnt.

Bei einem Teil der genannten Arten handelt es sich um Schädlinge, die in der Landwirtschaft, im Obstbau, in der Forstwirtschaft, in der Vorratswirtschaft und an Gebäuden und Materialien großen Schaden anrichten oder, was beispielsweise die Wespen angeht, zumindest eine erhebliche Belästigung und im Extremfall sogar Gesundheitsrrisiken (anaphylaktischer Schock) darstellen können.

Die erfindungsgemäßen Formulierungen enthalten in der Regel zwischen 0,0002 und 0,25 Gew.-%, vorzugsweise zwischen 0,001 und 0,02 Gew.-%, insbesondere zwischen 0,003 und 0,007 Gew.-% Silafluofen. Sie können beispielsweise als wäßrige Lösung, Suspension oder Emulsion, als Paste oder in fester Form vorliegen. Der Träger kann aber auch ein Nahrungsmittel pflanzlicher oder tierischer Herkunft, insbesondere ein Teil einer Pflanze sein. Die Formulierungen enthalten in der Regel mindestens einen die Insekten anlockenden weiteren Bestandteil, wobei dieser, abhängig von der anzulockenden Insektenart, differieren kann.

Insekten anlockende Zusätze können sowohl auf Kohlenhydrat- als auch auf Proteinbasis sein. Die beiden Prinzipien können auch kombiniert werden. Insbesondere bei proteinhaltigen Ködern, wie Fisch, Geflügel, Katzenfutter können wegen der Gefahr des Verderbs konservierende Zusätze notwendig sein.

Bei der Wespenbekämpfung sind flüssige Zubereitungen auf Wasserbasis oder Alkoholbasis bevorzugt, da sie von den sammelnden Individuen leichter und schneller aufgenommen werden können und gleichzeitig den Flüssigkeitsbedarf des Nestes befriedigen. Als flüssiger Träger für die Wespenbekämpfung hat sich beispielsweise eine Maissirup, Saccharose, Maltodextrin, ein Protein und gegebenenfalls ein Konservierungsmittel enthaltende wäßrige Zubereitung als geeignet erwiesen. Weiterhin geeignet sind Honig-Wasser-Mischungen, in denen Honig, vorzugsweise Bienenhonig die sammelnden Individuen anlockt.

Flüssige Zubereitungen können zusätzlich ein geeignetes Geliermittel, wie ein Polysaccharid, vorzugsweise 0,5 bis 10 Gew.-% Geliermittel enthalten.

Es hat sich als vorteilhaft erwiesen, flüssige Formulierungen in einem saugfähigen Material, wie Watte, bereitzuhalten oder den Insekten mittels eines Dochtes aus dem Vorratsbehälter anzubieten.

Manche Ameisen- und Wespenarten bevorzugen aber auch proteinhaltige feste oder halbfeste Köder, von denen sie Stücke abbeißen und ins Nest transportieren.

Andere wiederum (z.B. Blattschneiderameisen) bevorzugen pflanzliche Nahrung, so daß für diese Insektenarten Pflanzenteile, wie Stengel und Blätter als Träger für den Wirkstoff verwendet werden können. Als geeignet haben sich beispielsweise die Blätter von Taro, Süßkartoffel, Maniok und Kaffee erwiesen.

Die anwendungsfertigen Formulierungen (Köder) stellt man her, indem man den Träger mit einer für die Anwendung geeigneten, berechneten akut subletalen Dosis einer Silafluofen-Formulierung versetzt. Folgende Formulierungstypen sind beispielsweise geeignet, wobei emulgierbare Konzentrate (EC) bevorzugt sind:

a) Ein in Wasser leicht dispergierbares, benetzbares Pulver wird erhalten, indem man 25 Gew.-Teile Wirkstoff, 65 Gew.-Teile kaolinhaltigen Quarz als Inertstoff, 10 Gew.-Teile ligninsulfonsäures Kalium und 1 Gew.-Teil oleoylmethyltaurinsaures Natrium als Netz- und Dispergiermittel mischt und in einer Stiftmühle mahlt.

b) Ein in Wasser leicht dispergierbares Dispersionskonzentrat stellt man her, indem man 20 Gew.-Teile Wirkstoff, 6 Gew.-Teile Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis über 377 °C) mischt und in einer Reibkugelmühle auf eine Feinheit von unter 5 Mikron vermahlt.

c) Ein emulgierbares Konzentrat läßt sich herstellen aus 15 Gew.-Teilen Wirkstoff, 75 Gew.-Teilen Cyclohexanon als Lösungsmittel und 10 Gew.-Teilen oxethyliertes Nonylphenol (10 EO) als Emulgator.

d) Ein Granulat läßt sich herstellen aus 2 bis 15 Gew.-Teilen Wirkstoff und einem inerten Granulatträgermaterial wie Attapulgit, Bimsgranulat und/oder Quarzsand.

Folgende Beispiele dienen zur Erläuterung der Erfindung, ohne daß diese darauf beschränkt wäre:

A: Herstellung des emulgierbaren Konzentrats (EC)

19,6 Gew.-% Silafluofen

7,5 Gew.-% ®Emulsogen EL (Hoechst AG; nichtionischer Fettsäurepolyglykolester mit 36 Mol Ethylenoxid (EO))

2,9 Gew.-% ®Sapogenat T200 (Hoechst AG; Tributylphenolpolyglykolether mit 20 Mol EO)

65,7 Gew.-% ®Solvesso 200 (Exxon Chemicals)

wurden in einem Rührkolben 1 Stunde lang gemischt. Das auf diese Weise erhaltene EC wurde für die folgenden biologischen Beispiele verwendet.

B: Biologische Beispiele

1. Gemeine Wespe (Vespa vulgaris)

Eine Honig-Wasser-Mischung (Honig:Wasser = 1:5) wurde mit

0,005 Gew.-% Silafluofen in Form des o.g. EG versetzt. Aus dem Freiland wurde ein komplettes Wespennest mit 844 Arbeitern entnommen und im Gewächshaus in einem gesicherten Flugkäfig mit dieser Mischung auf einem Wattebausch beködert.

Alle Sammelwespen wurden auf der Futterquelle farbig markiert. Während neun Tagen wurde bei einer Temperatur von 25°C und 75 % relativer Luftfeuchtigkeit die Verteilung von Silafluofen im Wespennest ($^{14}$C-Markierung) sowie die Mortalitätsrate bestimmt.

Tabelle 1

| Silafluofen-Verteilung | | | | |
|---|---|---|---|---|
| Tage nach Versuchsbeginn | Silafluofen-Verteilung (ng/mg Körpergewicht) | | | |
| | markierte Wespen | nicht markierte Wespen | Königin | Larven, aus Nest geworfen |
| 0,1 | 50,2 | 37,1 | | |
| 1 | 40,0 | 22,2 | | |
| 2 | 13,9 | 7,0 | | 2,8 |
| 3 | 12,5 | 4,9 | | 31,5 |
| 7 | 12,7 | 1,4 | | 13,2 |
| 9 | | 0,6 | 0,14 | 7,7 |

Tabelle 2

| Kumulative Abtötungsrate (%) | | | |
|---|---|---|---|
| Tage nach Versuchsbeginn | Arbeiter % | Larven % | Königin % |
| 0,1 | 8,8 | | |
| 1 | 18,9 | 2,0 | |
| 2 | 29,9 | 3,4 | |
| 3 | 37,9 | 4,9 | |
| 7 | 90,6 | 41,7 | |
| 9 | 99,1 | 47,8 | 100 % |

Wie diese Untersuchungen gezeigt haben, werden alle adulten Wespen sowie die Königin mit eingetragenen, subletalen Mengen an Silafluofen abgetötet. Larven werden hochgradig dezimiert bzw. werden nicht mehr ausreichend gefüttert und sterben ab.

2. Blattschneiderameise (Atta cephalotes)

Taro-, Süßkartoffel-, Maniok- und Kaffeepflanzen wurden mit einer aus o.g. EC hergestellten, anwendungsfertigen wäßrigen Silafluofen-Formulierung bespritzt, wobei der Silafluofen-Gehalt der Pflanzen bei Versuchsbeginn auf 0,0005 Gew.-% a.i. eingestellt wurde. Eine Blattscheiderameisenkolonie (8678 Individuen) wurde bei 25°C und 75 % relativer Luftfeuchtigkeit 21 Tage lang mit diesen Pflanzen gefüttert, dann wurde auf die Pflanzen weitere anwendungsfertige Formulierung bis zu einem Gehalt von 0,0025 Gew.-% a.i. aufgebracht und der Versuch weitere 35 Tage fortgeführt.

Tabelle 3

| Kumulative Abtötungsrate (%) | |
|---|---|
| Tag | % |
| 6 | 7 |
| 10 | 10 |
| 19 | 55 |
| 36 | 73 |
| 51 | 98 |
| 56 | 100 |

**Patentansprüche**

1. Insektizide Formulierung zur Bekämpfung von sozialen Insekten, enthaltend Silafluofen und einen geeigneten Träger, wobei der Gehalt an Silafluofen so bemessen ist, daß die Formulierung bei den Individuen, welche diese aufnehmen, nicht akut letal wirkt.

2. Formulierung gemäß Anspruch 1, enthaltend zwischen 0,0002 und 0,25 Gew.-%, vorzugsweise zwischen 0,001 und 0,02 Gew.-%, insbesondere zwischen 0,003 und 0,007 Gew.-% Silafluofen.

3. Formulierung gemäß Anspruch 1 oder 2, welche als wäßrige Lösung, Suspension oder Emulsion, als Paste oder in fester Form vorliegt.

4. Formulierung gemäß Anspruch 1 oder 2, in welcher der Träger ein Nahrungsmittel pflanzlicher oder tierischer Herkunft, insbesondere ein Teil einer Pflanze ist.

**5.** Formulierung gemäß einem der Ansprüche 1 bis 4, welche mindestens einen die Insekten anlockenden weiteren Bestandteil enthält.

**6.** Formulierung gemäß einem der Ansprüche 1 bis 3 und 5, bei welcher der Träger im wesentlichen ein Honig-Wasser-Gemisch ist und worin der Honig die Rolle des die Insekten anlockenden Bestandteils spielt.

**7.** Eine wäßrige Formulierung gemäß einem der Ansprüche 1 bis 3, 5 und 6, welche zusätzlich ein Geliermittel, vorzugsweise 0,5 bis 10 % eines Geliermittels enthält.

**8.** Verfahren zur Bekämpfung von sozialen Insekten, bei welchem an einem für die Insekten zugänglichen und von ihnen häufig besuchten Ort eine Silafluofen enthaltende Formulierung plaziert wird, die Insekten die Formulierung aufnehmen, in ihr Nest transportieren und dort gegebenenfalls an andere Individuen verfüttern, wobei der Gehalt an Silafluofen so bemessen ist, daß die Formulierung mit einer zeitlichen Verzögerung die Individuen, welche die Formulierung direkt und/oder durch Verfüttern aufgenommen haben, abtötet.

**9.** Verfahren gemäß Anspruch 8, bei welchem der Gehalt der Formulierung an Silafluofen zwischen 0,0002 und 0,25 Gew.-%, vorzugsweise 0,0001 und 0,02 Gew.-%, insbesondere zwischen 0,003 und 0,007 Gew.-% liegt.

**10.** Verfahren gemäß Anspruch 8 oder 9, bei welchem die Formulierung als wäßrige Lösung, Suspension oder Emulsion, als Paste oder in fester Form vorliegt.

**11.** Verfahren gemäß Anspruch 8 oder 9, bei welchem ein Nahrungsmittel pflanzlicher oder tierischer Herkunft, insbesondere ein Teil einer Pflanze als Träger für die Formulierung verwendet wird.

**12.** Verfahren gemäß einem der Ansprüche 8 bis 11, bei welchem die Formulierung mindestens einen die Insekten anlockenden weiteren Bestandteil enthält.

**13.** Verfahren gemäß einem der Ansprüche 8 bis 10 und 12, bei welchem die Träger der Formulierung ein Honig-Wasser-Gemisch ist und worin der Honig die Rolle des die Insekten anlockenden Bestandteils spielt.

**14.** Verfahren gemäß einem der Ansprüche 8 bis 10, 12 und 13, bei welchem die Formulierung auf Wasserbasis ist und zusätzlich ein Geliermittel, vorzugsweise 0,5 bis 10 % eines Geliermittels enthält.

**15.** Verfahren gemäß einem der Ansprüche 8 bis 10, 12 und 13, bei welchem die Formulierung auf Wasserbasis ist und in einem saugfähigen Material bereitgehalten wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | J.APPL.ENTOMOL., Bd.113, 1992, HAMBURG Seiten 466 - 471 J.K. GRACE ET AL. 'Laboratory evaluation of the novel soil insecticide silafluofen against Coptotermes formosanus Shiraki.' * Seite 470, Absatz 3.3 * --- | 1-15 | A01N55/00 |
| X | CHEMICAL PATENTS INDEX, BASIC ABSTRACTS JOURNAL Week 8726, Derwent Publications Ltd., London, GB; AN 87-180602 & JP-A-62 108 885 (MITSUI TOATSU CHEM INC) 20. Mai 1987 * Zusammenfassung * --- | 1-15 | |
| X | CHEMICAL PATENTS INDEX, DOCUMENTATION ABSTRACTS JOURNAL Week 9015, Derwent Publications Ltd., London, GB; AN 90-111917 & JP-A-02 062 805 (DAINOPPON JOCHUGIKU) 2. März 1990 * Zusammenfassung * --- | 1-15 | **RECHERCHIERTE SACHGEBIETE (Int.Cl.6)** A01N |
| X | CHEMICAL PATENTS INDEX, DOCUMENTATION ABSTRACTS JOURNAL Week 9343, Derwent Publications Ltd., London, GB; AN 93-339598 & JP-A-05 246 809 (DAINIPPON JOCHUGIKU) 24. September 1993 * Zusammenfassung * --- -/-- | 1-15 | |

Der vorliegende Recherchenbericht wurde für alle Patentansprüche erstellt

| Recherchenort | Abschlußdatum der Recherche | Prüfer |
|---|---|---|
| DEN HAAG | 9. Mai 1995 | Decorte, D |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | PESTICIDE SCIENCE, Bd.28, Nr.3, 1990, BARKING GB Seiten 289 - 307 S.M. SIEBURTH ET AL. 'Organosilane insecticides. Part I: biological and physical effects of isosteric replacement of silicon for carbon in etofenprox and MTI-800.' * Seite 295, Absatz 3.1.2 * | 1,8 | |
| | | | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| DEN HAAG | 9. Mai 1995 | Decorte, D |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...................................................................................
& : Mitglied der gleichen Patentfamilie, übereinstimmendes
    Dokument

EPO FORM 1503 03.82 (P04C03)